# EUROPÄISCHE PATENTSCHRIFT

(11) **EP 3 512 074 B1**
(45) Veröffentlichungstag und Bekanntmachung des Hinweises auf die Patenterteilung: **17.06.2026**
(21) Anmeldenummer: 19150413.3
(22) Anmeldetag: 04.01.2019
(51) Int. Cl.: H02K 1/27, H02K 15/03

(54) **PERMANENTMAGNETROTOR**
PERMANENT MAGNET ROTOR
ROTOR À AIMANT PERMANENT

(30) Priorität: 10.01.2018 DE 102018200275; 25.10.2018 DE 102018218251
(43) Veröffentlichungstag der Anmeldung: 17.07.2019
(73) Patentinhaber: Bühler Motor GmbH, 90459 Nürnberg (DE)
(72) Erfinder: Günther, Heinz, 90522 Oberasbach (DE); Gundermann, Martin, 90402 Nürnberg (DE); Bauer, Jochen, 91465 Ergersheim (DE); Suttner-Reimann, Armin, 91126 Schwabach (DE); Wall, Andreas, 90453 Nürnberg (DE); Weiske, Klaus, 90571 Schwaig (DE); Zec, Mladen, 90491 Nürnberg (DE)

(56) Entgegenhaltungen:
- DE-A1- 102006 046 231
- DE-A1- 102007 029 719
- DE-A1- 102014 225 260
- DE-A1- 102015 222 271
- JP-A- 2000 295 824
- JP-A- 2015 154 665

## Beschreibung

Die Erfindung betrifft einen Permanentmagnetrotor (1) eines Elektromotors, mit einem aus zwei Teilblechpaketen (3, 4) zusammengesetztes Blechpaket (2), einer Mehrzahl von in Magnettaschen (5) des Blechpakets kraftschlüssig aufgenommenen Permanentmagneten (6), wobei sich diese über beide Teilblechpakete (3, 4) erstrecken, sowie ein Verfahren zu Herstellung eines solchen Permanentmagnetrotors.

Bei einer Vielzahl von bekannten Permanentmagnetrotoren weisen Permanentmagnete eine radiale oder tangentiale Erstreckungsrichtung innerhalb von Magnettaschen auf. Bei radial angeordneten Permanentmagneten lassen sich deutlich höhere magnetische Wirkungsgrade erzielen, deshalb werden diese zunehmend eingesetzt.

Aus der DE 10 2015 222 271 A1 ist ein gattungsgemäßer Permanentmagnetrotor bekannt, bei welchem die Magnete tangential angeordnet sind. Es sind zwei oder mehrere Rotorteilkörper vorhanden, die auch als Blechpaket ausgeführt sein können und bei denen die Permanentmagnete sich über diese mehreren Rotorteilkörper erstrecken. Einer der beiden Rotorteilkörper kann auch bezüglich einer zur Rotorachse Senkrechten Drehachse um einen Winkel von 180° gedreht sein. In der bekannten Schrift werden keine Angaben dazu gemacht, wie die Permanentmagnete innerhalb der Magnettaschen in Axialrichtung gehalten sind.

Die JP 2015 154 665 A offenbart einen Permanentmagnetrotor eines Elektromotors, mit einem aus zwei Teilblechpaketen zusammengesetzten Blechpaket, einer Mehrzahl von in Magnettaschen des Blechpakets kraftschlüssig aufgenommenen Permanentmagneten, wobei sich diese über beide Teilblechpakete erstrecken, wobei auslenkbare Blechzungen, welche den Kraftschluss aufrecht erhalten in einem ersten Teilblechpaket in eine erste axiale Richtung ausgelenkt sind und in einem zweiten Teilblechpaket in eine zweite axiale Richtung ausgelenkt sind, welche der ersten Richtung entgegengesetzt ist.

Aus der DE 10 2007 029 719 A1 sind Rotorbleche bekannt, bei denen nur jede 5 zweite Magnettasche eine Klemmnase hat. Allerdings wird dies nur zum Darstellen von Freiblechen durch Verdrehen der Bleche ausgenutzt.

DE 10 2015 222271 A1 offenbart einen Rotor für eine elektrische Maschine, der mindestens einen ersten Rotorteilkörper und einen zweiten, axial versetzten Rotorteilkörper umfasst. Die beiden Rotorteilkörper unterscheiden sich in ihrer Geometrie und/oder azimutalen Ausrichtung zueinander. Mindestens ein Teil der Aufnahmetaschen des ersten Rotorteilkörpers fluchtet axial mit mindestens einem Teil der Aufnahmetaschen des zweiten Rotorteilkörpers, und in diese zueinander fluchtenden Aufnahmetaschen ist jeweils ein gemeinsamer, einstückiger Magnetkörper eingesetzt, der beide Rotorteilkörper zumindest teilweise durchsetzt.

DE 10 2014 225260 A1 beschreibt ein Blechpaket für einen Rotor einer elektrischen Maschine, das über den Außenumfang des Blechpakets verteilte Taschen zur Aufnahme von Permanentmagneten aufweist. Jede Tasche hat mindestens ein federndes Halteelement, das an der dem Außenumfang zugewandten Außenseite der Tasche angeordnet ist.

JP 2000 295824 A bezieht sich auf eine Methode zur Montage eines Rotors mit einer Welle, die im Zentrum eines aus mehreren gestapelten Metallplatten bestehenden Kerns befestigt ist. Die Methode umfasst folgende Schritte: 1. Bilden einer gehärteten Schicht auf der Außenperipherie der Welle. 2. Einpressen der Welle in die im Zentrum des Kerns gebildete Bohrung. Somit ermöglicht diese Methode eine verbesserte Konzentrizität zwischen Welle und Kern des Rotors.

DE 10 2006 046 231 A1 beschreibt ein Rotorblech eines Rotors eines Elektromotors mit einem Schwerpunkt, einer Innenkontur und einer Außenkontur. Der Radialabstand der Innenkontur vom Schwerpunkt variiert zwischen Minimal- und Maximalwert in Abhängigkeit vom Tangentialwinkel. Der Radialabstand der Außenkontur ist unabhängig vom Tangentialwinkel größer als der Maximalwert der Innenkontur. Bei den Tangentialwinkeln mit Minimalwert der Innenkontur sind Zwischenausnehmungen eingebracht, sodass elastisch nachgebende Stege zwischen den Ausnehmungen und der Innenkontur verbleiben.

Aufgabe der Erfindung ist es bei einem gattungsgemäßen Permanentmagnetrotor für eine sichere und auch über die Lebensdauer beständige Befestigung der Permanentmagnete in den Magnettaschen zu sorgen, wobei eine möglichst einfache Montage möglich ist.

Diese Aufgabe wird erfindungsgemäß durch die Merkmale des Anspruchs 1 und das Verfahren gemäß Anspruch 9 gelöst.

Die Aufgabe wird gelöst durch einen Permanentmagnetrotor eines Elektromotors, mit einem aus zwei Teilblechpaketen zusammengesetztes Blechpaket (2), einer Mehrzahl von in Magnettaschen des Blechpakets kraftschlüssig aufgenommenen Permanentmagneten, wobei sich diese über beide Teilblechpakete erstrecken. Auslenkbare Blechzungen, welche den Kraftschluss zwischen den Permanentmagneten und den Magnettaschen aufrechterhalten, sind in einem ersten Teilblechpaket in eine erste axiale Richtung ausgelenkt und in einem zweiten Teilblechpaket in eine zweite axiale Richtung ausgelenkt, wobei die erste der zweiten Richtung entgegengesetzt ist. Durch diese Maßnahme wird ein Wandern der Magnete aufgrund von Temperaturschwankungen, welche gerichtete Mikrobewegungen verursachen kann, verhindert, weil deren Bewegungsrichtungen einander entgegen gerichtet sind. Die Teilblechpakete bestehen aus gestanzten Blechen. Um einen gleitenden Einpressvorgang zu erreichen ist vorgesehen, dass die Permanentmagnete in Stanzrichtung in die Magnettaschen eingepresst sind. Die Blechschnitte der Teilblechpakete bestehen aus mindestens zwei unterschiedlichen Blechschnitten, wobei die Blechzungen nicht in allen Blechschnitten vorhanden sind und unterschiedlich ausgebildete Blechzungen in unterschiedlichen Blechschnitten vorhanden sind. Auf diese Weise lassen sich ebenso Freiräume zwischen den Blechzungen herstellen. Durch unterschiedliche Schichtung kann die Einpresskraft gezielt über den Einpressweg der Permanentmagnete eingestellt werden. Eine oder mehrere Blechzungen weisen an ihrer radial innen liegenden Basis die gleiche Breite auf, wie an ihrem radial äußeren Zungenende. Eine oder mehrere Blechzungen ist/sind an ihrer radial innen liegenden Basis etwas breiter ausgebildet als an ihrem radial äußeren Zungenende.

Die Biegekräfte an den Blechzungen sind in der Regel an der Basis an einem zentralen Ring am größten. Damit die Biegekräfte von der radialen Kontaktposition mit einem Permanentmagneten möglichst unabhängig sind, sollen die Blechzungen zu ihrem freien Ende hin etwas verjüngt sein oder an der Basis etwas breiter sein, wie an ihrem radial äußeren Zungenende. Dadurch ergibt sich ein homogenerer Kraftverlauf über die Länge der Blechzungen.

Weiterbildungen der Erfindung werden in den Unteransprüchen näher ausgeführt. Da die Blechzungen durch den Permanentmagneten ausgelenkt sind, können sich die äußeren Blechzungen kaum mit dem Permanentmagneten verkrallen. Daher ist vorgesehen, dass von einem axialen Ende des Rotorblechpakets aus betrachtet im ersten oder in den ersten beiden oder in den ersten drei oder in den ersten vier oder in den ersten fünf Blechen keine Blechzungen vorhanden sind. Diese Maßnahme dient auch als Montageerleichterung, weil der Permanentmagnet zunächst mit Spiel in die Magnettasche eingefügt werden kann, bevor er radial nach außen gepresst wird.

Es ist vorteilhaft, wenn sich die Blechzungen (7) radial nach außen erstrecken und die Permanentmagnete (6) entsprechend radial nach außen drängen, welche sich radial an Polen (8) oder an Polschuhen (9) des Teilblechpakets (3, 4) abstützen. Dies ist insbesondere bei radial angeordneten Permanentmagneten mit tangentialer Magnetisierung sinnvoll, weil im Bereich der Blechzungen (7) keine Magnetfeldlinien des Hauptfelds verlaufen. Um die Blechzungen sind Freiräume erforderlich, welche den Blechzungen eine Auslenkung ermöglichen. Diese Freiräume bilden zudem Flussbarrieren, welche Streuflusseffekte und magnetische Kurzschlüsse minimieren.

Im Bereich der Polschuhe und an den Kanten der Permanentmagnete sind herstellungsbedingt stets Radien vorhanden. Damit die Permanentmagnete bei der Montage genau gefügt werden können, wurde vorgeschlagen, dass die Radien im Übergangsbereich zwischen den Polschuhen (9) und den anschließenden Seitenflächen der Magnettaschen (5) deutlich kleiner ausgeführt werden als gegenüberliegende Kantenradien der Permanentmagnete (6).

Die Biegekräfte an den Blechzungen sind in der Regel an der Basis an einem zentralen Ring (10) am größten. Damit die Biegekräfte von der radialen Kontaktposition mit einem Permanentmagneten möglichst unabhängig sind, sollen die Blechzungen (7) zu ihrem freien Ende hin deutlich verjüngt sein oder an der Basis deutlich breiter sein, wie an ihrem radial äußeren Zungenende. Dadurch ergibt sich ein homogenerer Kraftverlauf über die Länge der Blechzungen. Dies kann durch das Maß der Verjüngung beliebig eingestellt werden.

Die Breite der Magnettaschen (5) kann in radialer Richtung deutlich größer sein als in tangentialer Richtung oder umgekehrt.

Eine zweite Lösung ist durch folgende Verfahrensschritte gegeben: a) Bereitstellen von zwei Teilblechpaketen (3, 4), und einer Vielzahl Permanentmagneten (6); b) axiales Einpressen der Permanentmagnete (6) in das erste Teilblechpaket, so dass ein erster Abschnitt der Permanentmagnete (6) in Magnettaschen (5) des ersten Teilblechpakets aufgenommen ist und ein zweiter Abschnitt der Permanentmagnete (6) axial frei aus den Magnettaschen (5) ragt; c) axiales Aufpressen des zweiten Teilblechpakets (4) auf die freien Enden der Permanentmagnete (6). Durch diese Vorgehensweise werden die Blechzungen gegensinnig ausgelenkt, so dass es nicht zu einem Wandern der Magnete durch Temperaturwechselbelastung kommt.

Bei der Montage können die Permanentmagnete vorab magnetisiert sein oder in einer Variante auch erst in einem Teilpaket magnetisiert werden, sofern nur jede zweite Magnettasche mit einem Permanentmagneten bestückt ist.

Ausführungsbeispiele der Erfindung werden nachfolgend anhand der Zeichnung näher erläutert. Es zeigen:
- Fig. 1: ein Teilblechpaket,
- Fig. 2: eine Schnittdarstellung durch das Teilblechpaket gemäß Fig. 1,
- Fig. 3: ein mit Permanentmagneten bestücktes Teilblechpaket,
- Fig. 4: eine Schnittdarstellung des bestückten Teilblechpakets gemäß Fig. 3,
- Fig. 5: zwei Teilblechpakete mit teilbestückten Magnettaschen,
- Fig. 6: eine Auswahl unterschiedlicher Blechzungen,
- Fig. 7: eine räumliche Darstellung eines montierten Permanentmagnetrotors,
- Fig. 8: eine Schnittdarstellung des Permanentmagnetrotors gemäß Fig. 7,
- Fig. 9: eine zweite Ausführungsform eines voll bestückten Teilblechpakets mit einem unbestückten Teilblechpaket,
- Fig.: 10 eine räumliche Darstellung eines montierten Permanentmagnetmotors gemäß der zweiten Ausführungsform,
- Fig.: 11 eine Schnittdarstellung eines vollbestückten Teilblechpakets gemäß der zweiten Ausführungsform,
- Fig.: 12 eine Schnittdarstellung des Permanentmagnetrotors gemäß Fig. 10 und
- Fig.: 13 eine Variante zur zweiten Ausführungsform.

Hinweis: Bezugszeichen mit Index und entsprechende Bezugszeichen ohne Index bezeichnen namensgleiche Einzelheiten in den Zeichnungen und der Zeichnungsbeschreibung. Es handelt sich dabei um die Verwendung in einer anderen Ausführungsform, dem Stand der Technik und/oder die Einzelheit ist eine Variante. Die Ansprüche, die Beschreibungseinleitung, die Bezugszeichenliste und die Zusammenfassung enthalten der Einfachheit halber nur Bezugszeichen ohne Index.

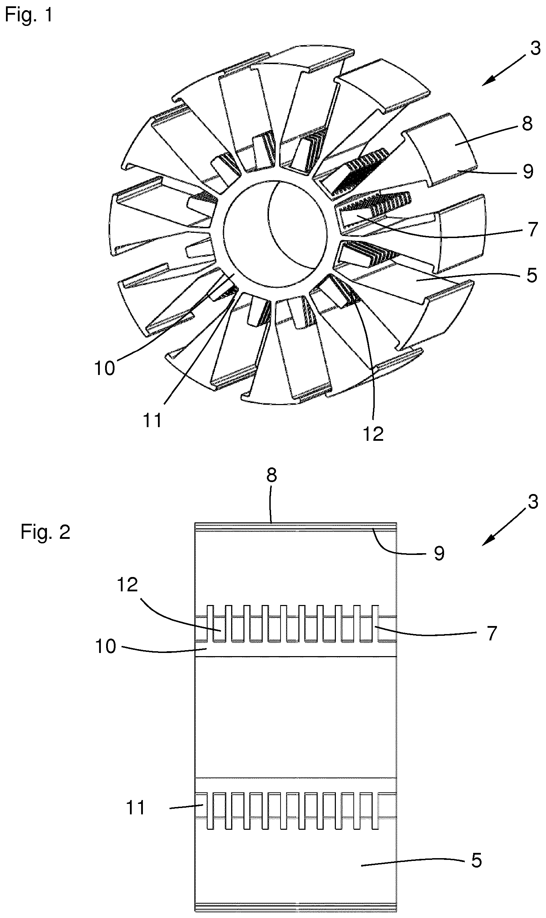

Fig. 1 zeigt ein Teilblechpaket 3, bestehend aus einer Vielzahl von unterschiedlich ausgebildeten Blechen. Ein erster Blechschnitt weist über Stege 11 mit einem zentralen Ring verbundene sich radial erstreckende Pole 8 auf, welche durch Magnettaschen 5 bildende Ausnehmungen voneinander getrennt sind. Bei einem zweiten Blechschnitt sind zusätzlich in jeder Magnettasche 5 vom zentralen Ring ausgehende und sich radial erstreckende Blechzungen 7 vorhanden. Die beiden Blechschnitte wechseln einander ab, so dass zwischen zwei axial benachbarten Blechzungen 7 ein Freiraum 12 verbleibt. Die Pole 8 weisen tangential anschließende Polschuhe 9 auf, die einen radialen Anschlag für zu montierende Permanentmagnete dienen.

Fig. 2 zeigt eine vereinfachte Schnittdarstellung (ohne Auflösung der Blechlagen) des Teilblechpakets 3 aus Fig. 1, wobei die Freiräume 12 zwischen den Blechzungen 7 deutlicher zu erkennen sind. Weiter sind dargestellt die Pole 8, die Polschuhe 9, der zentrale Ring 10 und die Stege 11.

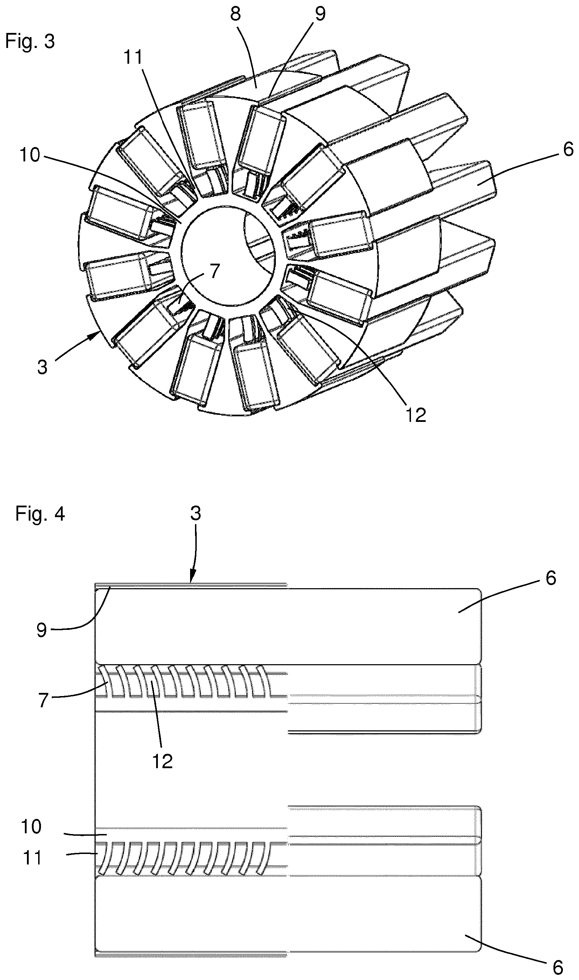

Fig. 3 zeigt ein mit Permanentmagneten 6 bestücktes Teilblechpaket 3, mit den Polen 8, den Polschuhen 9, den Blechzungen 7, dem zentralen Ring 10, den Stegen 11 und den Freiräumen 12. Da die Permanentmagnete sich über zwei Teilblechpakete 3 erstrecken ragen sie in dieser Ansicht mit der Hälfte ihrer Länge axial über das erste Teilblechpaket 3 hinaus.

Fig. 4 zeigt eine vereinfachte Schnittdarstellung (ohne Auflösung der Blechlagen) des mit Permanentmagneten 6 bestückten Teilblechpakets 3 gemäß Fig. 3, mit dem zentralen Ring 10, den Blechzungen 7, den Stegen 11, den Freiräumen 12, den Polen 8 und den Polschuhen 9. Die Permanentmagnete 6 sind radial zwischen die Blechzungen 7 und den Polschuhen spielfrei geklemmt. Die Blechzungen 7 sind in Einpressrichtung der Permanentmagnete 6 gebogen. Die Blechzungen können elastisch oder elastisch und plastisch verformt sein.

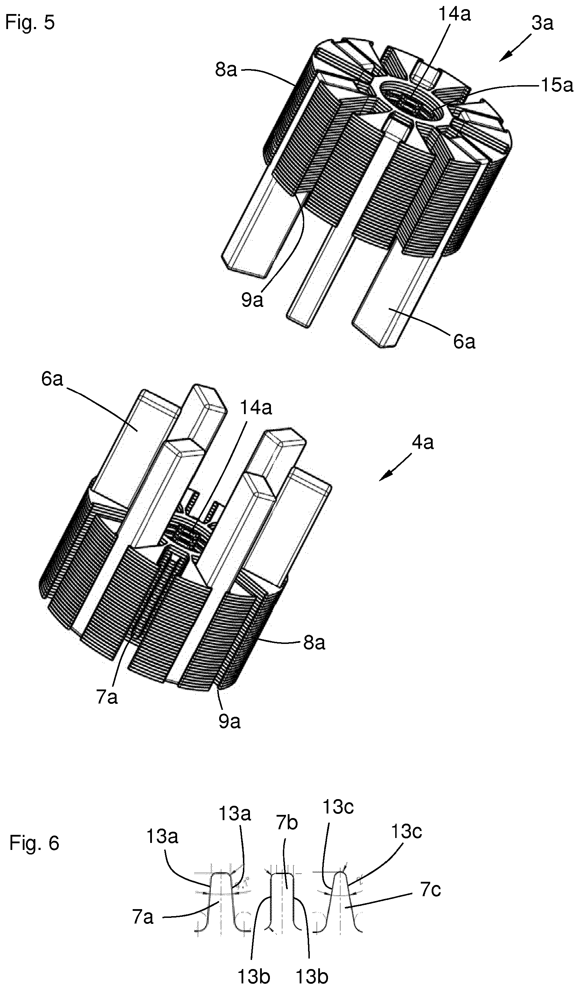

Fig. 5 zeigt zwei Teilblechpakete 3a, 4a, die mit Permanentmagneten 6a teilbestückt sind. Dabei trägt im gezeigten Zwischenzustand nur jede zweite Magnettasche 5a einen Permanentmagneten 6a. Die beiden Teilblechpakete 3a, 4a sind identisch ausgebildet und zueinander um 180° um eine Achse gedreht, die senkrecht auf der Rotorachse steht. Zusätzlich sind die beiden Teilpakete 3a, 4a um eine Rotorpolteilung um die Rotorachse verschwenkt. In den nicht mit Permanentmagneten bestückten Magnettaschen 5a sind die Blechzungen 7a erkennbar. In einer zentralen Ausnehmung 15a sind Vorsprünge 14a vorgesehen, die zum Verklemmen einer aufzunehmenden Welle dienen. Auch diese Vorsprünge weisen Freisparungen auf und wirken ähnlich wie die Federzungen 7a. Am Beginn des Blechpakets sind keine Vorsprünge 14a vorgesehen um das Einfügen der Welle zu erleichtern. Beim Einpressen der Permanentmagnete müssen diese gut geführt sein. Die Teilbestückten Teilblechpakete eignen sich insbesondere für kleinere Baugrößen, weil zwischen den Permanentmagneten mehr Platz für die Montageeinrichtungen verbleibt. Weiter sind in Fig. 5 dargestellt die Pole 8a, die Polschuhe 9a

Fig. 6 zeigt eine Auswahl unterschiedlicher Blechzungen 7a, 7b und 7c. Die Blechzunge 7a, 7b und 7c weisen Seitenkanten 13a, 13b, 13c auf und sind an ihrem freien Ende in den Ecken abgerundet. Die Seitenkanten 13b verlaufen bei der Blechzunge 7b parallel. Bei den Blechzungen 7a und 7c laufen die Seitenkanten 13a, 13b aufeinander zu, mit einem kleineren Winkel bei der Blechzunge 7a und einem größeren Winkel bei der Blechzunge 7c. Je größer der Winkel zwischen den Seitenkanten ist, desto geringer ist die Federkonstante der Blechzunge. Bei den Blechzungen 7b mit den parallelen Seitenkanten 13b werden beim Verbiegen schnell hohe Anpresskräfte bei einem geringen Federweg erreicht. Mit den Blechzungen 7c mit dem großen Winkel werden weichere Federeigenschaften erreicht. Hierdurch lässt sich ein größerer Toleranzbereich abdecken. Mit den Blechzungen 7a, die einen flacheren Winkel ihrer Seitenkanten 13a aufweisen wirken ähnliche Kräfte wie bei den Blechzungen 7c erzeugt, jedoch wird verhindert, dass durch die Federwirkung größere seitliche Kräfte erzeugt werden. Es ist auch möglich die Breite der Blechzungen im Bereich des zentralen Rings zu variieren, um die Federkraft zu beeinflussen.

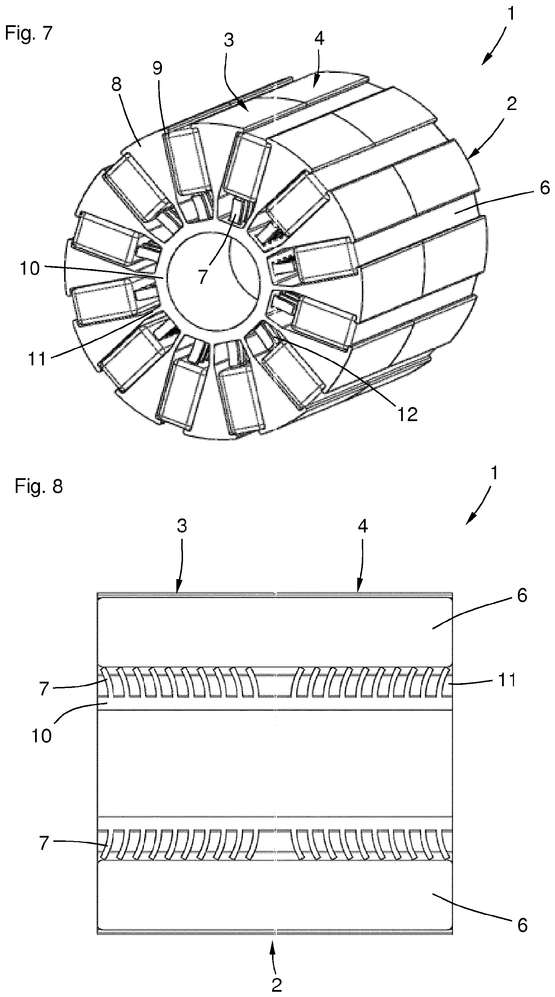

Fig. 7 zeigt eine räumliche Darstellung eines montierten Permanentmagnetrotors 1, mit einem Blechpaket 2, dem ersten Teilblechpaket 3, dem zweiten Teilblechpaket 4, den Permanentmagneten 6, den Blechzungen 7, dem zentralen Ring 10, den Polen 8, den Polschuhen 9, den Stegen 11 und den Freiräumen 12. Die Permanentmagnete 6 erstrecken sich über beide Teilblechpakete 3 und 4.

Fig. 8 zeigt eine vereinfachte Schnittdarstellung (ohne Auflösung der Blechlagen) des Permanentmagnetrotors gemäß Fig. 7, mit den Teilblechpaketen 3 und 4, den Blechzungen 7, den Permanentmagneten 6, dem zentralen Ring 10, den Stegen 11, den Freiräumen 12, den Polen 8 und den Polschuhen 9. Wie deutlich zu erkennen ist, sind die Blechzungen 7 im Teilblechpaket 3 entgegengesetzt zu den Blechzungen im Teilblechpaket 4 ausgelenkt.

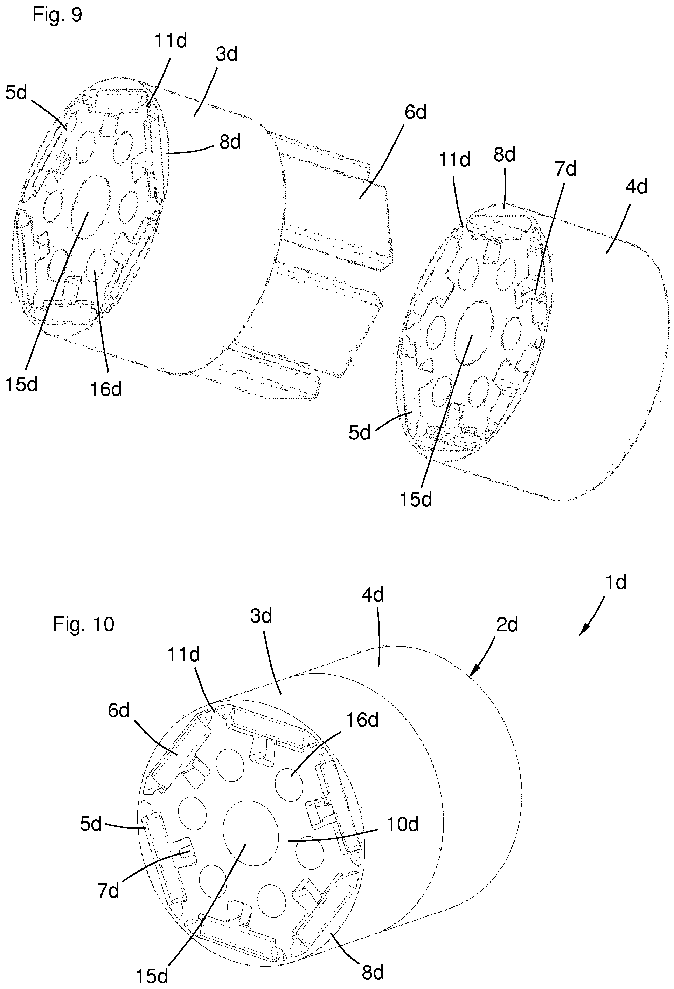

Fig. 9 zeigt eine zweite Ausführungsform eines voll bestückten Teilblechpakets 3d mit einem unbestückten Teilblechpaket 4d, mit tangential angeordneten Permanentmagneten 6d, die in Magnettaschen 5d des ersten Teilblechpakets 3d aufgenommen sind.

Fig. 10 zeigt eine räumliche Darstellung eines montierten Permanentmagnetmotors 1d gemäß der zweiten Ausführungsform, mit dem ersten Teilblechpaket 3d, dem zweiten Teilblechpaket 4d, welche zusammen das Blechpaket 2d bilden, die Magnettaschen 5d, die montierten Permanentmagnete 6d, die Blechzungen 7d, die zentrale Ausnehmung 15d, den zentralen Ring 10d, die Stege 11d zwischen dem zentralen Ring 10d und Polen 8d und den Durchbrüchen 16d.

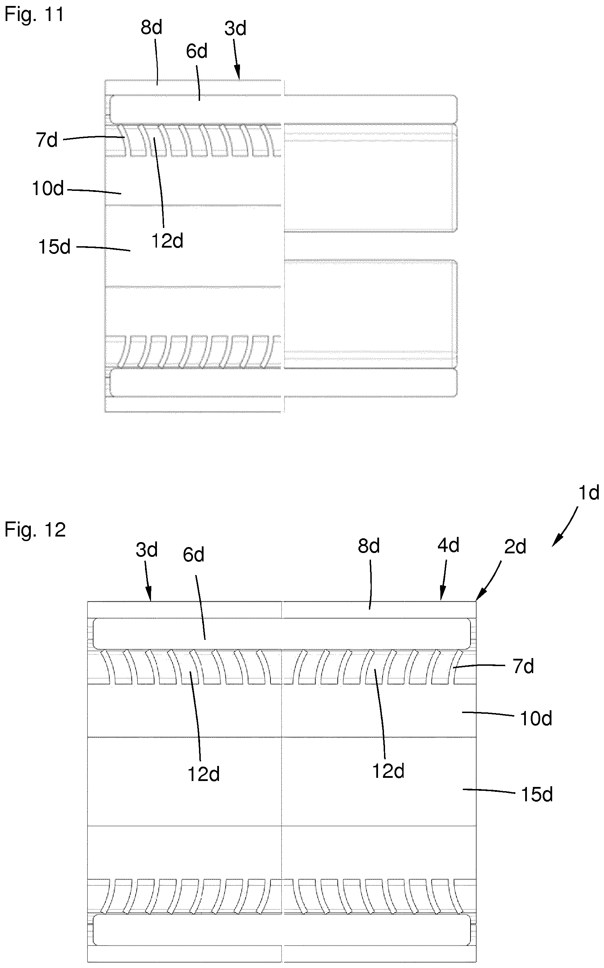

Fig. 11 zeigt eine Schnittdarstellung eines vollbestückten Teilblechpakets 3d gemäß der zweiten Ausführungsform, mit den Polen 8d, den Permanentmagneten 6d, dem zentralen Ring 10d, den durch Freiräume 12d getrennte Blechzungen 7d und der zentralen Ausnehmung 15d.

Fig. 12 zeigt eine Schnittdarstellung des Permanentmagnetrotors 1d gemäß Fig. 10, mit den Teilblechpaketen 3d und 4d, den Polen 8d, den Permanentmagneten 6d, den Blechzungen 7d, den Freiräumen 12d, dem zentralen Ring 10d und die zentralen Ausnehmung 15d.

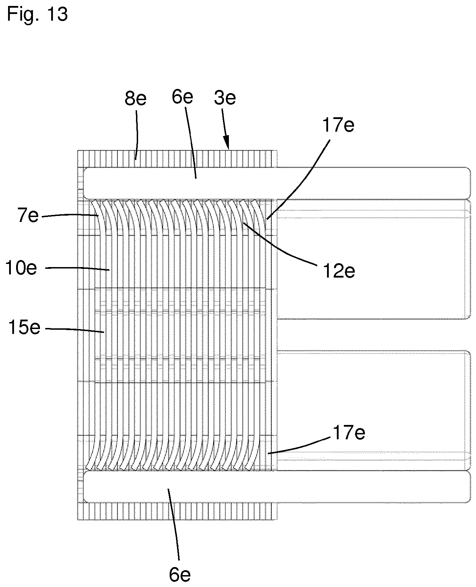

Fig. 13 zeigt eine Variante zur zweiten Ausführungsform, mit dem ersten Teilblechpaket 3e, den Permanentmagneten 6e, den Polen 8e, den Blechzungen 7e, den Freiräumen 12e, dem zentralen Ring 10e, der zentralen Ausnehmung 15e und Fügehilfen 17e in Form von mehreren Anfangsblechen, die keine Blechzungen aufweisen. Hierdurch wird die Montage der Permanentmagneten 6e erleichtert.

### Bezugszeichenliste

- 1: Permanentmagnetrotor
- 2: Blechpaket
- 3: erstes Teilblechpaket
- 4: zweites Teilblechpaket
- 5: Magnettasche
- 6: Permanentmagnet
- 7: Blechzunge
- 8: Pol
- 9: Polschuh
- 10: zentraler Ring
- 11: Steg
- 12: Freiraum
- 13: Seitenkante
- 14: Vorsprung
- 15: zentrale Ausnehmung
- 16: Durchbruch
- 17: Fügehilfe

## Patentansprüche

1. Permanentmagnetrotor (1) eines Elektromotors, mit einem aus zwei Teilblechpaketen (3, 4) zusammengesetztes Blechpaket (2), einer Mehrzahl von in Magnettaschen (5) des Blechpakets kraftschlüssig aufgenommenen Permanentmagneten (6), wobei sich diese über beide Teilblechpakete (3, 4) erstrecken, wobei auslenkbare Blechzungen (7), welche den Kraftschluss aufrecht erhalten in einem ersten Teilblechpaket (3) in eine erste axiale Richtung ausgelenkt sind und in einem zweiten Teilblechpaket (4) in eine zweite axiale Richtung ausgelenkt sind, welche der ersten Richtung entgegengesetzt ist, wobei die Teilblechpakete (3, 4) aus gestanzten Blechen bestehen, **dadurch gekennzeichnet, dass** die Permanentmagnete in Stanzrichtung in die Magnettaschen (5) eingepresst sind, dass die Blechschnitte der Teilblechpakete (3, 4) aus mindestens zwei unterschiedlichen Blechschnitten bestehen, wobei die Blechzungen (7) nicht in allen Blechschnitten vorhanden sind und unterschiedlich ausgebildete Blechzungen in unterschiedlichen Blechschnitten vorhanden sind, dass eine oder mehrere Blechzungen (7) an ihrer radial innen liegenden Basis die gleiche Breite aufweist, wie an ihrem radial äußeren Zungenende und dass eine oder mehrere Blechzungen (7) an ihrer radial innen liegenden Basis etwas breiter ausgebildet ist/sind als an ihrem radial äußeren Zungenende.

2. Permanentmagnetrotor nach Anspruch 1, **dadurch gekennzeichnet, dass** in einem Teilblechpaket (3, 4) abwechselnd ein oder mehrere erste Blechschnitte und ein oder mehrere zweite Blechschnitte einander abwechseln.

3. Permanentmagnetrotor nach zumindest einem der vorangehenden Ansprüche, **dadurch gekennzeichnet, dass** von einem axialen Ende des Rotorblechpakets aus betrachtet im ersten oder in den ersten beiden oder in den ersten drei oder in den ersten vier oder in den ersten fünf Blechen keine Blechzungen vorhanden sind.

4. Permanentmagnetrotor nach zumindest einem der vorangehenden Ansprüche, **dadurch gekennzeichnet, dass** die Blechzungen (7) sich radial nach außen erstrecken und die Permanentmagnete (6) entsprechend radial nach außen drängen, wobei sich die Permanentmagnete (6) radial an Polen (8) oder an Polschuhen (9) des Teilblechpakets (3, 4) abstützen.

5. Permanentmagnetrotor nach Anspruch 4, **dadurch gekennzeichnet, dass** die Radien im Übergangsbereich zwischen den Polschuhen (9) und den anschließenden Seitenflächen der Magnettaschen (5) deutlich kleiner sind als die gegenüberliegenden Kantenradien der Permanentmagnete (6).

6. Permanentmagnetrotor nach zumindest einem der vorangehenden Ansprüche, **dadurch gekennzeichnet, dass** eine oder mehrere Blechzungen (7) an ihrer radial innen liegenden Basis deutlich breiter ausgebildet ist/sind als an ihrem radial äußeren Zungenende.

7. Permanentmagnetrotor nach zumindest einem der vorangehenden Ansprüche, **dadurch gekennzeichnet, dass** die Breite der Magnettaschen (5) in radialer Richtung deutlich größer ist als in tangentialer Richtung.

8. Permanentmagnetrotor nach zumindest einem der Ansprüche 1 bis 6, **dadurch gekennzeichnet, dass** die Breite der Magnettaschen (5) in tangentialer Richtung deutlich größer ist als in radialer Richtung.

9. Verfahren zur Herstellung eines Permanentmagnetrotor (1) eines Elektromotors gemäß Anspruch 1, mit einem aus zwei Teilblechpaketen (3, 4) zusammengesetztes Blechpaket (2), einer Mehrzahl von in Magnettaschen (5) des Blechpakets kraftschlüssig aufgenommenen Permanentmagneten (6), wobei sich diese über beide Teilblechpakete (3, 4) erstrecken, **gekennzeichnet durch** folgende Verfahrensschritte: a) Bereitstellen von zwei Teilblechpaketen (3, 4), und einer Vielzahl Permanentmagneten (6); b) axiales Einpressen der Permanentmagnete (6) in das erste Teilblechpaket, so dass ein erster Abschnitt der Permanentmagnete (6) in Magnettaschen (5) des ersten Teilblechpakets aufgenommen ist und ein zweiter Abschnitt der Permanentmagnete (6) axial frei aus den Magnettaschen (5) ragt; c) axiales Aufpressen des zweiten Teilblechpakets (4) auf die freien Enden der Permanentmagnete (6).

## Claims

1. A permanent-magnet rotor (1) of an electric motor, with a laminated core (2) composed of two partial laminated cores (3, 4), a plurality of permanent magnets (6) received in a force-fit in magnet pockets (5) of the laminated core, wherein said permanent magnets extend over both partial laminated cores (3, 4), wherein deflectable lamination tongues (7) which maintain the force-fit connection in a first partial laminated core (3) are deflected in a first axial direction, and in a second partial laminated core (4) are deflected in a second axial direction which is opposed to the first direction, wherein the partial laminated cores (3, 4) consist of stamped metal sheets, **characterised in that** the permanent magnets are pressed into the magnet pockets (5) in the stamping direction, **in that** the lamination cuts of the partial laminated cores (3, 4) consist of at least two different lamination cuts, with the lamination tongues (7) not being present in all the lamination cuts, and differently formed lamination tongues being present in different lamination cuts, **in that** one or more lamination tongues (7) have the same width at its/their radially inner base(s) as at its/their radially outer tongue end(s), and **in that** one or more lamination tongues (7) is/are formed to be somewhat wider at its/their radially inner base(s) than at its/their radially outer tongue end(s).

2. A permanent-magnet rotor according to claim 1, **characterised in that** alternately one or more first lamination cuts and one or more second lamination cuts alternate with each other in a partial laminated core (3, 4).

3. A permanent-magnet rotor according to at least one of the preceding claims, **characterised in that** no lamination tongues are present, viewed from one axial end of the laminated rotor core, in the first or in the first two or in the first three or in the first four or in the first five laminations.

4. A permanent-magnet rotor according to at least one of the preceding claims, **characterised in that** the lamination tongues (7) extend radially outwards and urge the permanent magnets (6) correspondingly radially outwards, with the permanent magnets (6) being supported radially on poles (8) or on pole shoes (9) of the partial laminated core (3, 4).

5. A permanent-magnet rotor according to claim 4, **characterised in that** the radii in the region of transition between the pole shoes (9) and the adjoining side faces of the magnet pockets (5) are considerably smaller than the opposing edge radii of the permanent magnets (6).

6. A permanent-magnet rotor according to at least one of the preceding claims, **characterised in that** one or more lamination tongues (7) is/are formed to be considerably wider at its/their radially inner base(s) than at its/their radially outer tongue end(s).

7. A permanent-magnet rotor according to at least one of the preceding claims, **characterised in that** the width of the magnet pockets (5) in the radial direction is considerably greater than in the tangential direction.

8. A permanent-magnet rotor according to at least one of claims 1 to 6, **characterised in that** the width of the magnet pockets (5) in the tangential direction is considerably greater than in the radial direction.

9. A method for producing a permanent-magnet rotor (1) of an electric motor in accordance with claim 1, with a laminated core (2) composed of two partial laminated cores (3, 4), a plurality of permanent magnets (6) received in a force-fit in magnet pockets (5) of the laminated core, wherein said permanent magnets extend over both partial laminated cores (3, 4), **characterised by** the following method steps: a) providing two partial laminated cores (3, 4) and a multiplicity of permanent magnets (6); b) axially pressing the permanent magnets (6) into the first partial laminated core, so that a first portion of the permanent magnets (6) is received in magnet pockets (5) of the first partial laminated core and a second portion of the permanent magnets (6) protrudes axially freely out of the magnet pockets (5); c) axially pressing the second partial laminated core (4) onto the free ends of the permanent magnets (6).

## Revendications

1. Rotor à aimants permanents (1) d'un moteur électrique, avec un paquet de tôles (2) composé de deux paquets de tôles partiels (3, 4), une pluralité d'aimants permanents (6) reçus par liaison de force dans des pochettes magnétiques (5) du paquet de tôles, dans lequel ceux-ci s'étendent par-dessus les deux paquets de tôles partiels (3, 4), dans lequel des languettes de tôle (7) pouvant être déviées, lesquelles préservent la liaison de force, sont déviées dans un premier paquet de tôles partiel (3) dans une première direction axiale et sont déviées dans un deuxième paquet de tôles partiel (4) dans une deuxième direction axiale, laquelle est opposée à la première direction, dans lequel les paquets de tôles partiels (3, 4) se composent de tôles poinçonnées, **caractérisé en ce que** les aimants permanents sont enfoncés dans les pochettes magnétiques (5) dans la direction de poinçonnage, **en ce que** les lamelles de tôle des paquets de tôles partiels (3, 4) sont composées d'au moins deux lamelles de tôle différentes, dans lequel les languettes de tôle (7) ne sont pas présentes dans toutes les lamelles de tôle et des languettes de tôle formées différemment sont présentes dans des lamelles de tôle différentes, **en ce qu'**une ou plusieurs languettes de tôle (7) présente la même largeur au niveau de sa base se situant radialement à l'intérieur qu'au niveau de son extrémité de languette radialement à l'extérieur et **en ce qu'**une ou plusieurs languettes de tôle (7) est/sont formée(s) de façon un peu plus large au niveau de sa/leur base se situant radialement à l'intérieur qu'au niveau de son/leur extrémité de languette radialement à l'extérieur.

2. Rotor à aimants permanents selon la revendication 1, **caractérisé en ce que** dans un paquet de tôles partiel (3, 4) alternent une ou plusieurs premières lamelles de tôle en alternance avec une ou plusieurs deuxièmes lamelles de tôle.

3. Rotor à aimants permanents selon au moins l'une des revendications précédentes, **caractérisé en ce que** vu depuis une extrémité axiale du paquet de tôles de rotor aucune languette de tôle n'est présente dans la première ou dans les deux premières ou dans les trois premières ou dans les quatre premières ou dans les cinq premières tôle(s).

4. Rotor à aimants permanents selon au moins l'une des revendications précédentes, **caractérisé en ce que** les languettes de tôle (7) s'étendent radialement vers l'extérieur et les aimants permanents (6) poussent de façon correspondante radialement vers l'extérieur, dans lequel les aimants permanents (6) s'appuient radialement contre des pôles (8) ou contre des éléments polaires (9) du paquet de tôles partiel (3, 4).

5. Rotor à aimants permanents selon la revendication 4, **caractérisé en ce que** les rayons dans la zone de transition entre les éléments polaires (9) et les surfaces latérales adjacentes des pochettes magnétiques (5) sont beaucoup plus petits que les rayons de bord s'y opposant des aimants permanents (6).

6. Rotor à aimants permanents selon au moins l'une des revendications précédentes, **caractérisé en ce qu'**une ou plusieurs languettes de tôle (7) est/sont formée(s) de façon beaucoup plus large au niveau de sa/leur base se situant radialement à l'intérieur qu'au niveau de son/leur extrémité de languette radialement à l'extérieur.

7. Rotor à aimants permanents selon au moins l'une des revendications précédentes, **caractérisé en ce que** la largeur des pochettes magnétiques (5) est beaucoup plus grande dans la direction radiale que dans la direction tangentielle.

8. Rotor à aimants permanents selon au moins l'une des revendications 1 à 6, **caractérisé en ce que** la largeur des pochettes magnétiques (5) est beaucoup plus grande dans la direction tangentielle que dans la direction radiale.

9. Procédé de fabrication d'une rotor à aimants permanents (1) d'un moteur électrique selon la revendication 1, avec un paquet de tôles (2) composé de deux paquets de tôles partiels (3, 4), une pluralité d'aimants permanents (6) reçus par liaison de force dans des pochettes magnétiques (5) du paquet de tôles, dans lequel ceux-ci s'étendent par-dessus les deux paquets de tôles partiels (3, 4), **caractérisé par** les étapes de procédé suivantes : a) fourniture de deux paquets de tôles partiels (3, 4) et d'une pluralité d'aimants permanents (6) ; b) enfoncement axial des aimants permanents (6) dans le premier paquet de tôles partiel de sorte qu'une première section des aimants permanents (6) soit reçue dans des pochettes magnétiques (5) du premier paquet de tôles partiel et qu'une deuxième section des aimants permanents (6) dépasse librement de façon axiale depuis les pochettes magnétiques (5) ; c) enfoncement axial du deuxième paquet de tôles partiel (4) jusque sur les extrémités libres des aimants permanents (6).
